# EUROPEAN PATENT APPLICATION

(11) **EP 2 783 815 A2**
(43) Date of publication of application: **01.10.2014**
(21) Application number: 14160450.4
(22) Date of filing: 18.03.2014
(51) Int. Cl.: B25J 9/16

(54) **Robot system and method for producing to-be-processed material**

(30) Priority: 19.03.2013 JP 2013056698
(71) Applicant: Kabushiki Kaisha Yaskawa Denki, Kitakyushu-shi, Fukuoka 806-0004 (JP)
(72) Inventor: Asahi, Takefumi, Kitakyushu-shi, Fukuoka 806-0004 (JP); Sawada, Yukiko, Kitakyushu-shi, Fukuoka 806-0004 (JP)
(74) Representative: Viering, Jentschura & Partner Patent- und Rechtsanwälte

(57) **Abstract**

A robot system 1 includes a robot 51L, 51R, a control device 6, and a projection device 8. The control device 6 is configured to receive area information on an area defining an operation of the robot 51L, 51R. The projection device 8 is configured to project the area onto an object adjacent to the robot 51L, 51R based on the area information received by the control device 6.

## Description

### BACKGROUND

### FIELD OF THE INVENTION

The present invention relates to a robot system and a method for producing a to-be-processed-material.

### DISCUSSION OF THE BACKGROUND

In recent years, there has been an increasing demand for automating work using a robot, instead of by humans. Japanese Patent No. 4648486 discloses that various areas defined for the operation of the robot are set in a robot controller.

The contents of Japanese Patent No. 4648486 are incorporated herein by reference in their entirety.

In robot systems including robots, there is a demand for improved efficiency in teaching.

It is an object of the present invention to provide a robot system and a method for producing a to-be-processed-material that ensure improved efficiency in teaching.

### SUMMARY

According to one aspect of the present invention, a robot system 1 includes a robot 51L, 51R, a control device 6, and a projection device 8. The control device 6 is configured to receive area information on an area defining an operation of the robot 51L, 51R. The projection device 8 is configured to project the area onto an object adjacent to the robot 51L, 51R based on the area information received by the control device 6.

The present disclosure provides a robot system and a method for producing a to-be-processed-material that ensure improved efficiency in teaching.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic view of a robot system according to an embodiment;
FIG. 2 illustrates a display on a setting device; and
FIG. 3 is a plan view of an area projected on an object adjacent to a robot.

### DESCRIPTION OF THE EMBODIMENTS

The embodiments will now be described with reference to the accompanying drawings, wherein like reference numerals designate corresponding or identical elements throughout the various drawings.

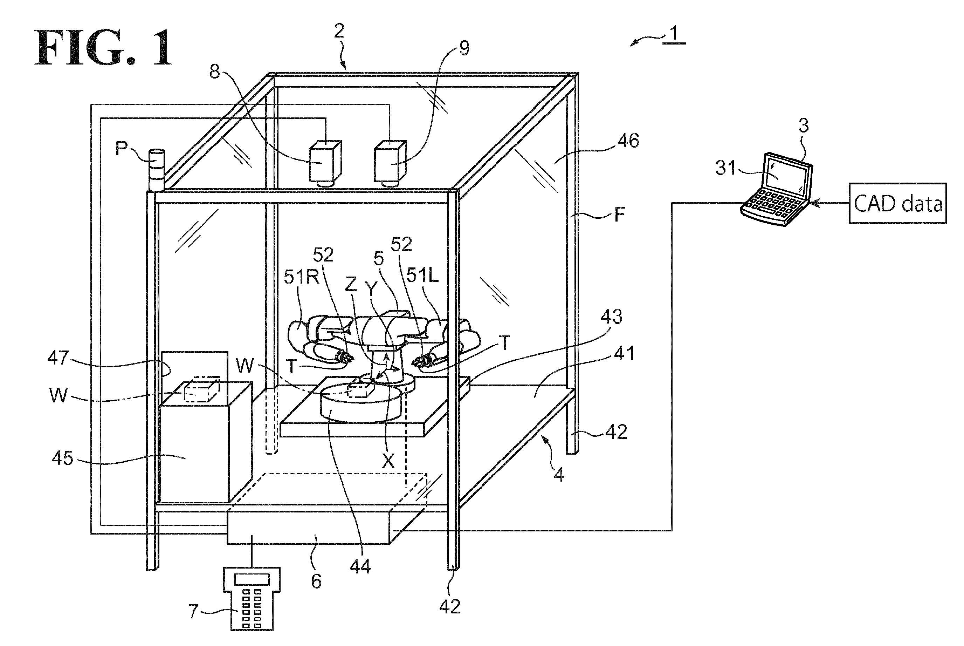

As shown in FIG. 1, a robot system 1 includes a robot cell 2 and a setting device 3. The robot cell 2 includes a frame 4, a two-arm robot 5, a robot controller (control device) 6, a projector (projection device) 8, and a camera (image capture device) 9. A plurality of such robot cells 2 may be aligned to form a production line. In forming a production line of a plurality of aligned robot cells 2, the setting device 3 may be provided for each of the robot cells 2 or may be shared among the plurality of robot cells 2.

The frame 4 supports the two-arm robot 5. The frame 4 includes a support plate 41 and four legs 42. The support plate 41 is in the form of a rectangular plate, and the legs 42 are disposed under the support plate 41. A base 43 in the form of a rectangular plate is disposed on the support plate 41. The two-arm robot 5 is disposed on the base 43. Also on the base 43, a cylindrical work table 44 is disposed at a position separated from the two-arm robot 5. The two-arm robot 5 works on the work table 44.

On the support plate 41A, a rectangular parallel piped handover stand 45 is disposed at a position separated from the base 43 (at a corner of the support plate 41 in FIG. 1). A workpiece W is placed onto the handover stand 45 and handed over between the two-arm robot 5 and an operator. An example of the workpiece W to be handed over is a tool T to be used by the two-arm robot 5.

The support plate 41 is provided with a cover 46, which covers the base 43, the work table 44, and the handover stand 45 on the sides and top. The cover 46 includes side plates, a ceiling plate, and a frame F. The side plates extend upward from the four sides of the support plate 41. The ceiling plate is disposed on top of the side plates. The frame F supports the side plates and the ceiling plate. The frame F includes vertical columns and horizontal columns. The vertical columns extend upward from the four corners of the support plate 41. The horizontal columns couple the upper ends of the vertical columns to each other. An example of the side plates and the ceiling plate of the cover 46 is a transparent material (for example, polycarbonate), which makes the inside of the robot cell 2 viewable from outside. A handover port 47 is formed in a portion of one of the side plates of the cover 46 that is adjacent to the handover stand 45. The operator is able to put the operator's hand through the handover port 47. An indicator light P is mounted to the frame F to indicate the operation status of the robot cell 2.

The two-arm robot 5 includes a left arm 51L and a right arm 51R. The left arm 51L and the right arm 51R are able to cooperate together to work, and work independently from each other. That is, the left arm 51L and the right arm 51R each function as a robot. The left arm 51L and the right arm 51R each have a multi-articular structure and include a coupling 52 at the distal end of each arm. The left arm 51L and the right arm 51R are each able to operate with six degrees of freedom implemented by a plurality of actuators incorporated in the two-arm robot 5. This enables the coupling 52 to take various kinds of position and posture. The tool T is mounted to the coupling 52. The left arm 51L and the right arm 51R may have any other degrees of freedom, such as five degrees of freedom and seven or more degrees of freedom.

The robot controller 6 controls the operation of the two-arm robot 5, and also controls the projector 8 and the camera 9. An example of the robot controller 6 is a computer including an arithmetic operation device, a storage device, and an input-output device. Examples of the information input and output to and from the robot controller 6 include, but are not limited to, information (area information) on an area defining the operation of the left arm 51L and the right arm 51R, and one or more programs (jobs) specifying a series of operations of the left arm 51L and the right arm 51R.

The area defining the operation of the left arm 51L and the right arm 51R includes a robot operation area, a cooperative operation area, and an entry prohibited area. The left arm 51L and the right arm 51R are allowed to enter the robot operation area. The robot operation area is an area other than the cooperative operation area and the entry prohibited area.

The operator or at least one of the left arm 51L and the right arm 51R having permission to enter the cooperative operation area is allowed to enter the cooperative operation area. Examples of the cooperative operation area include, but are not limited to, an area above the work table 44 and an area above the handover stand 45. The cooperative operation area may be divided into a first cooperative operation area and a second cooperative operation area. In the first cooperative operation area, the left arm 51L and the right arm 51R may operate in cooperation without the operator entering the first cooperative operation area. In the second cooperative operation area, the two-arm robot 5 and the operator may operate in cooperation. For example, the cooperative operation area above the work table 44 may be the first cooperative operation area, where at least one of the left arm 51L and the right arm 51R having permission to enter is allowed to enter. The cooperative operation area above the handover stand 45 may be the second cooperative operation area, where the operator or at least one of the left arm 51L and the right arm 51R having permission to enter is allowed to enter.

The left arm 51L and the right arm 51R are prohibited from entering the entry prohibited area, since the entry prohibited area is set to prevent the left arm 51L and the right arm 51R from colliding with an object adjacent to the left arm 51L and the right arm 51R. Examples of the entry prohibited area include, but are not limited to, an area where those objects such as the support plate 41, the base 43, the work table 44, the handover stand 45, and the cover 46 exist, and an area outside the cover 46. For more improved security, the entry prohibited area may further include an area that is within a predetermined distance from the object.

The robot controller 6 is disposed under the support plate 41, for example. The two-arm robot 5 and the robot controller 6 are in wired connection. The two-arm robot 5 and the robot controller 6 may be coupled to each other wirelessly, or the two-arm robot 5 may incorporate the robot controller 6.

The area information, the job(s), and other information in the robot controller 6 can be set or amended at the site by the operator using a teaching pendant (teaching device) 7 (which is online teaching). The teaching pendant 7 may be coupled to the robot controller 6 through a wire or wirelessly.

Based on the area information input into the robot controller 6, the projector 8 projects an area defining the operation of the left arm 51L and the right arm 51R onto the object adjacent to the two-arm robot 5. The projector 8 is secured on the ceiling plate of the cover 46 and oriented in a downward direction. The projector 8 emits light from above the two-arm robot 5. Examples of the object onto which the area is projected include, but are not limited to, the support plate 41, the base 43, the work table 44, the handover stand 45, and the cover 46. The projector 8 may be coupled to the robot controller 6 through a wire or wirelessly.

The camera 9 captures an image of a range of space that includes the two-arm robot 5 and the object adjacent to the two-arm robot 5. The camera 9 is secured next to the projector 8 on the ceiling plate of the cover 46 and oriented in a downward direction. The camera 9 captures the image from above the two-arm robot 5. The camera 9 is coupled to the robot controller 6 through a wire. This ensures that the image captured by the camera 9 is transmitted to the setting device 3 through the robot controller 6. The camera 9 may be coupled to the robot controller 6 wirelessly.

The setting device 3 generates the area information, the job(s), and other information to be set in the robot controller 6 (by offline teaching). An example of the setting device 3 is a computer including an arithmetic operation device, a storage device, and an input-output device. The setting device 3 includes a display 31 such as a liquid crystal display. The setting device 3 receives CAD data as information on the two-arm robot 5 and the object adjacent to the two-arm robot 5. The setting device 3 displays a virtual space on the display 31 using the CAD data. It is also possible for the setting device 3 to receive size information on the two-arm robot 5 and the object adjacent to the two-arm robot 5, and for setting device 3 itself to generate the CAD data on the two-arm robot 5 and the object adjacent to the two-arm robot 5 based on the received information. The setting device 3 receives through the robot controller 6 the image captured by the camera 9.

Based on the received information, the setting device 3 generates the area information, the job(s), and other information. An example of the area information generated by the setting device 3 is an area coordinate value in a coordinate system that is based on a predetermined point in the robot cell 2 (examples of the area coordinate value including an X coordinate value, a Y coordinate value, a Z coordinate value, and a combination of these values). When the operator checks the information displayed on the display 31 and inputs an instruction, the setting device 3 generates the area information based on the input instruction. The setting device 3 may automatically generate the area information from the input CAD data. The setting device 3 may also automatically generate the area information from the image captured by the camera 9.

While the setting device 3 is coupled to the robot controller 6 through a wire, the setting device 3 may also be coupled to the robot controller 6 wirelessly, or the setting device 3 may not be coupled to the robot controller 6. When the setting device 3 is not coupled to the robot controller 6, the area information generated by the setting device 3 may be stored in a storage medium. The storage medium then may be coupled to the robot controller 6 so that the area information is input into the robot controller 6. Alternatively, the storage medium may be used to input the image captured by the camera 9 into the setting device 3.

Next, an exemplary operation of the robot system 1 will be described.

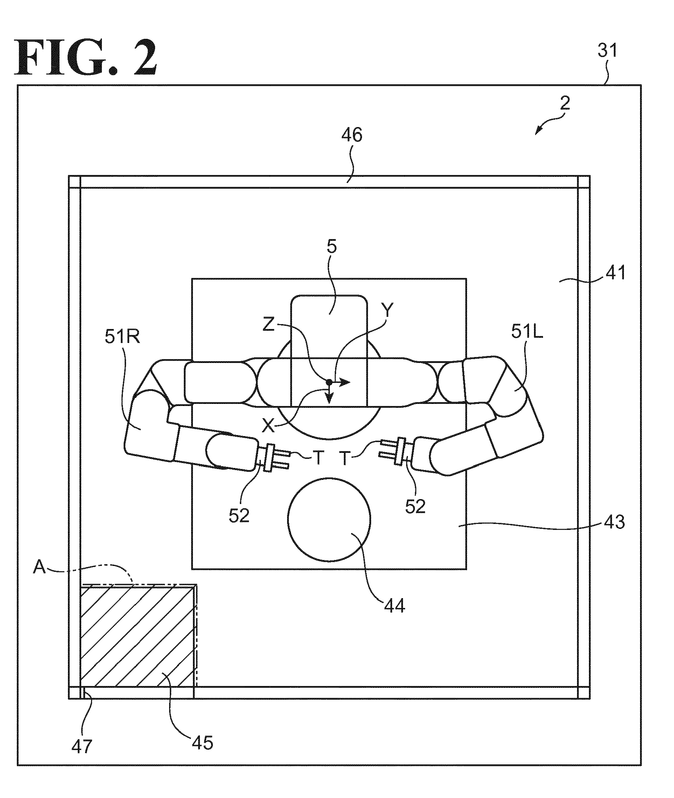

In the robot system 1, first, the CAD data on the two-arm robot 5 and the object adjacent to the two-arm robot 5 is input into the setting device 3. The input CAD data is displayed as a virtual space on the display 31 of the setting device 3. When the operator inputs an instruction into the setting device 3, the setting device 3 sets a range indicated by the instruction as an area defining the operation of the left arm 51L and the right arm 51R. Then, the setting device 3 generates area information on the area. As shown in FIG. 2, the area information generated in the display 31 is on the cooperative operation area A above the handover stand 45. Then, the area information generated by the setting device 3 is input into the robot controller 6.

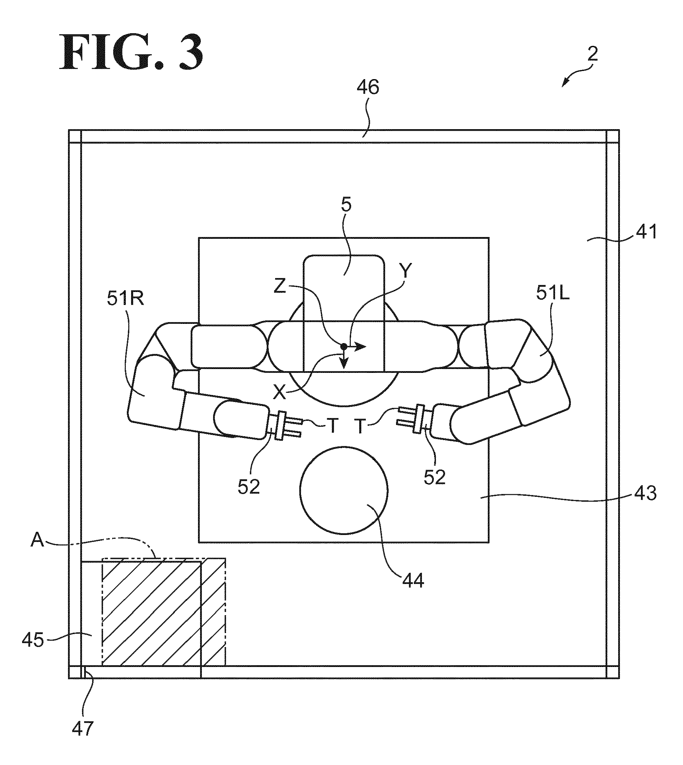

Then, as show in FIG. 3, based on the area information input into the robot controller 6, the projector 8 actually projects the cooperative operation area A onto the object adjacent to the two-arm robot 5. Thus, the cooperative operation area A is visualized. Here, when there is an error between the area information generated in the virtual space by the setting device 3 and the position of the object adjacent to the two-arm robot 5 on the site, the cooperative operation area A and the handover stand 45 do not match, as shown in FIG. 3. Specifically, in some cases, the cooperative operation area A may be projected across the handover stand 45 and the support plate 41, and thus offset from the desired position in the Y direction. The operator on the site accommodates to this situation by, for example, amending the area information using the teaching pendant 7.

As has been described hereinbefore, the robot system 1 according to this embodiment enables the operator to visually check the area defining the operation of the left arm 51L and the right arm 51R. This ensures that the operator is able to quickly check whether the area setting is correct or erroneous.

In conventional robot systems, to check whether the area setting is correct or erroneous, it has been necessary to actually put the robot into operation and use the operation as a basis to check whether the area setting is correct or erroneous. This manner of checking is time consuming and involves difficulty in checking.

In the robot system 1 according to this embodiment, based on the area information input into the robot controller 6, the projector 8 projects the area defining the operation of the left arm 51L and the right arm 51R onto the object adjacent to the two-arm robot 5. This enables the operator on the site to visually check the area defining the operation of the left arm 51L and the right arm 51R. The operator performs teaching work while checking the visualized area information. This improves teaching efficiency.

The robot system 1 includes the setting device 3. The setting device 3 receives information on the object adjacent to the two-arm robot 5, and generates area information using the received information on the object. Then, the area information generated by the setting device 3 is input into the robot controller 6. This facilitates generation of desired area information. In particular, when a plurality of robot cells 2 are aligned to form a production line, the same area information generated by the setting device 3 may be set throughout the robots cells 2. This further improves teaching efficiency.

The information on the object adjacent to the two-arm robot 5 to be received by the setting device 3 is CAD data on the object adjacent to the two-arm robot 5. Thus, the area information is generated by referring to the CAD data on the object, and this facilitates generation of the area information and further improves teaching efficiency.

The robot system 1 includes the camera 9. The camera 9 captures an image of the area that the projector 8 has projected onto the object adjacent to the two-arm robot 5. The image captured by the camera 9 is input into the setting device 3 as information on the object adjacent to the two-arm robot 5. When, for example, there is an error between the area information generated in the virtual space and the position of the object adjacent to the two-arm robot 5 on the site, the operator is able to remotely amend the area information while checking the image captured by the camera 9 on the display 31 of the setting device 3.

The area defining the operation of the left arm 51L and the right arm 51R includes the robot operation area, the cooperative operation area, and the entry prohibited area. The left arm 51L and the right arm 51R are allowed to enter the robot operation area. The operator or at least one of the left arm 51L and the right arm 51R having permission to enter the cooperative operation area is allowed to enter the cooperative operation area. The left arm 51L and the right arm 51R are prohibited from entering the entry prohibited area. These areas, which are originally invisible, are visualized by being projected onto the object adjacent to the two-arm robot 5. This improves teaching efficiency.

The robot system 1 includes the frame 4. The frame 4 supports the two-arm robot 5 and defines the robot cell 2. When a plurality of the robot cells 2 are aligned to form a production line, each of the robot cells 2 has improved teaching efficiency, and this shortens the time required for actuating the entire production line.

Similar advantageous effects are obtained in a method for producing a to-be-processed-material when a workpiece is obtained using the robot system 1. Examples of the workpiece include, but are not limited to, parts such as bolts and assembled structures such as automobiles.

Obviously, numerous modifications and variations of the present disclosure are possible in light of the above teachings. It is therefore to be understood that within the scope of the appended claims, the present disclosure may be practiced otherwise than as specifically described herein.

For example, in the above-described embodiment, the setting device 3 generates the area information. Another possible example is that the area information is set using the teaching pendant 7, the area information is input into the robot controller 6 from the teaching pendant 7, and the projector 8 projects the areas onto the object adjacent to the two-arm robot 5.

In the above-described embodiment, the projector 8 and the camera 9 are coupled to the robot controller 6, and input and output data and information to and from the setting device 3 through the robot controller 6. Another possible example is that at least one of the projector 8 and the camera 9 is coupled to the setting device 3 without the intervention of the robot controller 6, and controlled by the setting device 3.

In the above-described embodiment, the projector 8 and the camera 9 are secured on the ceiling plate of the cover 46. Another possible example is that the projector 8 and the camera 9 are secured on a side plate of the cover 46. When the projector 8 is secured on a side plate of the cover 46, an area image is projected from the side of the two-arm robot 5. This ensures checking of an offset in the height direction (Z direction). The projector 8 and the camera 9 may also be secured at a position outside the robot cell 2. That is, the projector 8 only needs to be secured at a position from which the projector 8 is able to project the area onto the object adjacent to the two-arm robot 5. The camera 9 only needs to be secured at a position where the camera 9 is able to capture an image of a range of space that includes the two-arm robot 5 and the object adjacent to the two-arm robot 5. The projector 8 and the camera 9 each may be provided in plural.

In the above-described embodiment, the area projection is performed at the time of teaching of the robot system 1. Another possible example is that the area projection is performed at the time of playback of the robot system 1 (when the robot system 1 is under operation). It is also possible to change the area projection state in accordance with the situation.

Specifically, during the playback of the robot system 1, the period of time during which the projector 8 is projecting the cooperative operation area A in, for example, green light onto the handover stand 45 may be set as a period of time during which the operator is allowed to enter the cooperative operation area A. The period of time during which the projector 8 is projecting the cooperative operation area A in red light onto the handover stand 45 may be set as a period of time during which the left arm 51L or the right arm 51R is allowed to enter the cooperative operation area A. Alternatively, the period of time during which the projector 8 is continuously projecting (in a continuous lighting manner) the cooperative operation area A may be set as a period of time during which the operator is allowed to enter the cooperative operation area A. The period of time during which the projector 8 is intermittently projecting (in a blinking manner) the cooperative operation area A may be set as a period of time during which the left arm 51L or the right arm 51R is allowed to enter the cooperative operation area A. In these cases, the operator is able to easily determine whether the operator has permission to enter the cooperation area, resulting in improved security.

In the above-described embodiment, the cooperative operation area A is projected. It is also possible to project the robot operation area or the entry prohibited area. It is also possible to simultaneously project two or more areas among the cooperative operation area, the robot operation area, and the entry prohibited area. When two or more areas are simultaneously projected, the areas may be projected in different colors. This facilitates identification of each area by the operator.

In the above-described embodiment, the robot controller 6 controls the two-arm robot 5 and also serves as a controller for the projector 8. It is also possible to provide an additional controller for the projector 8 instead of the robot controller 6. Also in the above-described embodiment, the area is projected onto the object adjacent to the two-arm robot 5. As necessary, it is also possible to project the area onto the two-arm robot 5 itself.

While in the above-described embodiment the frame 4 is provided with the cover 46, the cover 46 may not necessarily be provided. While in the above-described embodiment the robot is the two-arm robot 5 with the left arm 51L and the right arm 51R, the robot may have a single arm. The configuration, number, and material of each of the elements in the above-described embodiment should not be construed in a limiting sense, and are open to change.
- 1: Robot system
- 3: Setting device
- 4: Frame
- 5: Two-arm robot
- 6: Robot controller (control device)
- 7: Teaching pendant (teaching device)
- 8: Projector (projection device)
- 9: Camera (image capture device)
- 51L: Left arm (robot)
- 51R: Right arm (robot)

## Claims

1. A robot system 1, **characterized by**:
a robot 51L, 51R;
a control device 6 configured to receive area information on an area defining an operation of the robot 51L, 51R; and
a projection device 8 configured to project the area onto an object adjacent to the robot 51L, 51R based on the area information received by the control device 6.

2. The robot system 1 according to claim 1, further comprising a setting device 3 configured to receive information on the object and to generate the area information using the received information on the object,
wherein the control device 6 is configured to receive the area information generated by the setting device 3.

3. The robot system 1 according to claim 2, wherein the information on the object to be received by the setting device 3 comprises CAD data on the object.

4. The robot system 1 according to claim 2 or 3, further comprising an image capture device 9 configured to capture an image of the area projected onto the object by the projection device 8,
wherein the information on the object to be received by the setting device 3 comprises the image captured by the image capture device 9.

5. The robot system 1 according to any one of claims 1 to 4, wherein the control device 6 is configured to receive the area information from a teaching device 7 coupled to the control device 6.

6. The robot system 1 according to any one of claims 1 to 4,
wherein the area comprises at least one of a robot operation area, a cooperative operation area, and an entry prohibited area,
wherein the robot 51L, 51R is allowed to enter the robot operation area,
wherein at least one of an operator and the robot 51L, 51R having permission to enter the cooperative operation area is allowed to enter the cooperative operation area, and
wherein the robot 51L, 51R is prohibited from entering the entry prohibited area.

7. The robot system 1 according to any one of claims 1 to 6, further comprising a frame 4 defining a robot cell 2.

8. A method for producing a to-be-processed-material, **characterized by** obtaining the to-be-processed-material using the robot system 1 according to any one of claims 1 to 7.
